# EUROPEAN PATENT SPECIFICATION

(11) **EP 3 800 522 B1**
(45) Date of publication and mention of the grant of the patent: **04.05.2022**
(21) Application number: 20196160.4
(22) Date of filing: 15.09.2020
(51) Int. Cl.: G05D 23/19, B23Q 11/14

(54) **AUXILIARY APPARATUS USING FOUR-WAY ELECTRONIC VALVE TO ACHIEVE TEMPERATURE RISE AND FALL EFFECT ON COMPONENT OF MACHINE TOOL**
HILFSVORRICHTUNG MIT ELEKTRONISCHEM VIERWEGEVENTIL ZUR ERZIELUNG EINER TEMPERATURANSTIEGS- UND -ABFALLWIRKUNG AUF EINE KOMPONENTE EINER WERKZEUGMASCHINE
APPAREIL AUXILIAIRE UTILISANT UNE VANNE ÉLECTRONIQUE À QUATRE VOIES POUR OBTENIR UN EFFET DE HAUSSE ET DE BAISSE DE LA TEMPÉRATURE SUR UN COMPOSANT DE MACHINE-OUTIL

(30) Priority: 04.10.2019 TW 108136046; 23.10.2019 TW 108138271
(43) Date of publication of application: 07.04.2021
(73) Proprietor: Surpass World Technology Co., Ltd., Taichung City 42058 (TW)
(72) Inventor: CHU, Chun-Hsien, Taichung City 42058 (TW)
(74) Representative: Straus, Alexander

(56) References cited:
- US-A1- 2009 174 101
- US-A1- 2019 047 104

## Description

### BACKGROUND OF THE INVENTION

### 1. Technical Field

The present invention relates to the technology of temperature control of a machine tool, and in particular, to an auxiliary apparatus using a four-way electronic valve to achieve temperature rise and fall effect on a component of a machine tool.

### 2. Description of Related Art

A currently known technique for cooling a machine tool mainly utilizes a cooling fluid received inside a storage tank, and a cooling device is used to perform cooling of the storage tank, in order to allow the cooling fluid after cooling to flow to the machine tool, thereby achieving the cooling of the machine tool.

Taiwanese Patent No. 1593501 discloses a machine tool constant temperature control system and a flow channel switch valve, and it is mainly used to adjust the temperature of a machine tool during its operation in order to improve the machining precision and quality of the machine tool. The main technical means adopted to achieve the aforementioned function is to utilize its storage tank, pump, cooling device and flow channel switch valve in order to provide the cooling effect. As for the heating function, it is further installed with a temperature sensor and a heating device. US 2019047104 A1 discloses a thermal stability control system and a control method thereof for a machine tool. The control system mainly consists of a machine cooling sub-system composed of a pump, at least a cooling loop and a tank for storing cooling fluid, a cooling fluid cooling and heating sub-system, a heater and a micro controller. The cooling fluid cooling and heating sub-system further consists of a condenser, an evaporator, a directional valve, an expansion valve and a compressor. The micro controller dominates corresponding operation combinations of turning the heater on or off, enabling or disenabling the cooling fluid cooling and heating sub-system as a heat pump or a cooler by activating or releasing the directional vale, and adjusting the driving frequency of an inverter duty motor to drive the pump to change the flow rate of cooling fluid through the cooling loop according the real time load of the machine tool. US 2009/174101 A1 relates to an apparatus for controlling the temperature of molds, which substantially operates as the system known from the US 2019047104 A1.

Despite that the aforementioned known technique utilizes a cooling device and a heat device to perform cooling and heating of the fluid inside the storage tank, followed by pumping such cooling fluid into the receiving container of the machine tool with a pump in order to adjust the working temperature of the machine tool, nevertheless, during the actual operation, temperature control cannot be achieved easily. This is mainly due to that regardless of the heating or cooling of the cooling fluid, the cooling fluid always flows back to the storage tank after cooling or is directly heated inside the storage tank. However, the quantity of the fluid inside the storage tank is far greater than the quantity of the fluid inside the pipelines. As a result, once the fluid after heating or cooling flows back to the storage tank, in terms of the overall temperature of the entire fluid inside the storage tank, it has very limited effect on the overall temperature. To be more specific, regardless of heating or cooling, to increase or decrease the overall temperature of the entire fluid inside the storage tank, it requires significant amount of time and relatively large power. In other words, it is not possible to satisfy the demand for rapid temperature rise of fall, but requiring a significant period of waiting time for the temperature of the fluid inside the storage tank to increase or decrease in order to achieve effective temperature adjustment effect on the machine tool. Moreover, the aforementioned technique further requires modification of the cooling device originally equipped in the machine tool in order to achieve effective operation. However, modification of device can alter the original structure, which is likely to cause the problem of machine malfunction and error.

In view of the above, the aforementioned known technique has the drawback of an extremely slow speed of temperature adjustment, and for conditions requiring relatively high temperature adjustment speed, it is insufficient and ineffective. In addition, such known technique is also associated with the drawback of requiring modification of the original cooling device or storage tank.

### BRIEF SUMMARY OF THE INVENTION

From the aforementioned known technique, it is of the drawback of extremely slow temperature adjustment speed, such that it is unable to satisfy the condition requiring fast adjustment of temperature. In addition, the aforementioned temperature adjustment device requires the modification of the original cooling device or storage tank, leading to increase of cost and the likelihood of machine malfunction and error due to such modification.

In view of the above, the present invention provides an auxiliary apparatus using a four-way electronic valve to achieve temperature rise and fall effect on a component of a machine tool, such that when the temperature of the component of a machine tool is to be adjusted higher, the auxiliary apparatus of the present invention is able to achieve heating effect, and it does not require the modification of the original cooling device used by the machine tool.

To achieve the aforementioned effect, the present invention provides an auxiliary apparatus using a four-way electronic valve to achieve temperature rise and fall effect on a component of a machine tool, adapted to be connected to pipelines connected to a component of a machine tool and to a cooling device, the auxiliary apparatus comprising: a four-way electronic valve having a front end inlet, a front end outlet, a rear end outlet and a rear end inlet; the four-way electronic valve electrically connected to a control source and controlled by the control source to switch between two channel states; under a first channel state, the front end inlet being fluidly connected to the rear end outlet but not fluidly connected to the front end outlet, and the rear end inlet being fluidly connected to the front end outlet but not fluidly connected to the rear end outlet; under a second channel state, the front end inlet being fluidly connected to the front end outlet but not fluidly connected to the rear end outlet, and the rear end inlet being fluidly connected to the rear end outlet but not fluidly connected to the front end outlet; the front end inlet configured to allow a fluid of the cooling device to enter therein, and the front end outlet configured to allow the fluid to flow out to the cooling device; an outflow channel having one end connected to the rear end outlet and another end configured to allow the fluid to flow out to the component of a machine tool; a return fluid incoming channel having one end connected to the rear end inlet and another end configured to allow the fluid returning from the component of a machine tool to enter therein; and a pump arranged on any one of the two of the outflow channel and the return fluid incoming channel, and electrically connected to the control source in order to be controlled by the control source to drive the fluid inside the channel where the pump is arranged thereon to move.

Accordingly, the present invention is able to provide an additional heating function for a spindle of a machine tool originally equipped with a cooling device while retaining its original cooling function; therefore, it is able to achieve the effect of increasing the temperature of the component of a machine tool when the temperature is to be increased. In addition, the present invention does not require modification of the cooling device originally used by the machine tool. Consequently, the drawbacks associated with the aforementioned known technique or prior art are overcome.

### BRIEF DESCRIPTION OF THE SEVERAL VIEWS OF THE DRAWINGS

FIG. 1 is schematic block diagram illustrating the first preferred embodiment of the present invention;
FIG. 2 is a circuit block diagram of the first preferred embodiment of the present invention;
FIG. 3 shows an installation state diagram of the first preferred embodiment of the present invention;
FIG. 4 shows an action state diagram of the first preferred embodiment of the present invention;
FIG. 5 is another action state diagram of the first preferred embodiment of the present invention;
FIG. 6 is schematic block diagram illustrating the second preferred embodiment of the present invention; and
FIG. 7 is a circuit block diagram of the second preferred embodiment of the present invention.

### DETAILED DESCRIPTION OF THE INVENTION

To illustrate the technical features of the present invention, the following a detailed description of preferred embodiments of the present invention along with the accompanied drawings.

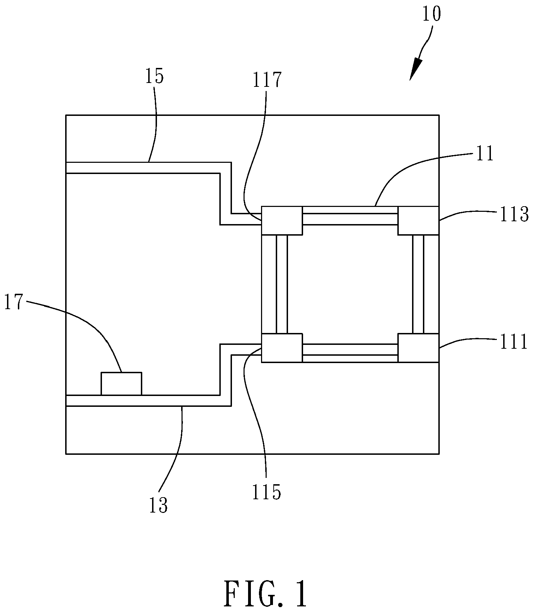

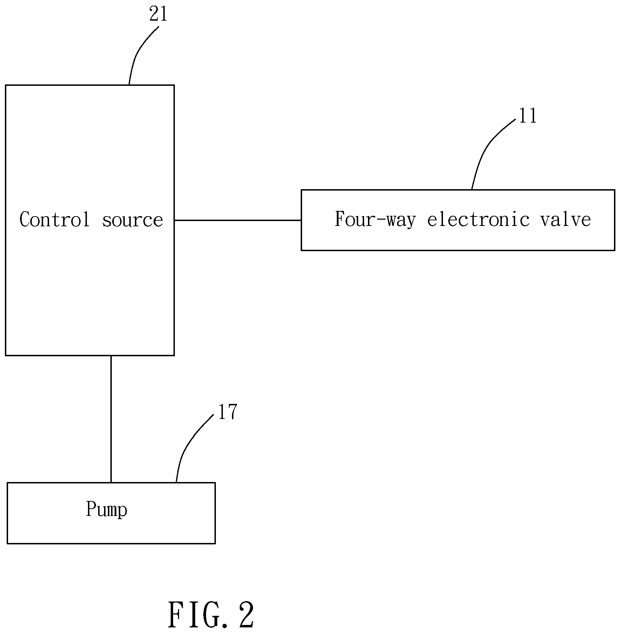

As shown in FIG. 1 to FIG. 3, according to a first preferred embodiment of the present invention, an auxiliary apparatus 10 using a four-way electronic valve to achieve temperature rise and fall effect on a component of a machine tool is provided, and it is adapted to be connected to pipelines connected to a component of a machine tool and to a cooling device 91. In the first embodiment, the component of the machine tool refers to, such as, a machine tool spindle 81, and the machine tool spindle 81 is mainly used as an example for the illustration of the present invention described in the following. The auxiliary apparatus 10 using a four-way electronic valve to achieve temperature rise and fall effect on a component of a machine tool mainly comprises a four-way electronic valve 11, an outflow channel 13, a return fluid incoming channel 15 and a pump 17.

The four-way electronic valve 11 includes a front end inlet 111, a front end outlet 113, a rear end outlet 115 and a rear end inlet 117. The four-way electronic valve 11 is electrically connected to a control source 21 and controlled by the control source 21 to switch between two channel states. The control source 21 in this embodiment can be an external box, such as a built-in control box of the machine tool, or an external microcomputer control module. When it is switched to a first channel state, the front end inlet 111 is fluidly connected to the rear end outlet 115 but is not fluidly connected to the front end outlet 113, and the rear end inlet 117 is fluidly connected to the front end outlet 113 but is not fluidly connected to the rear end outlet 115. When it is under a second channel state, the front end inlet 111 is fluidly connected to the front end outlet 113 but is not fluidly connected to the rear end outlet 115, and the rear end inlet 117 is fluidly connected to the rear end outlet 115 but us not fluidly connected to the front end outlet 113. The front end inlet 111 is configured to allow a fluid of the cooling device 91 to enter therein, and the front end outlet 113 is configured to allow the fluid to flow out to the cooling device 91.

The outflow channel 13 includes one end connected to the rear end outlet 115 and another end configured to allow the fluid to flow out to the machine tool spindle 81.

The return fluid incoming channel 15 includes one end connected to the rear end inlet 117 and another end configured to allow the fluid returning from the machine tool spindle 81 to enter therein.

The pump 17 is arranged on any one of the two of the outflow channel 13 and the return fluid incoming channel 15; in the first embodiment, it is arranged on the outflow channel 13 as an example for illustration. In addition, the pump 17 is electrically connected to the control source 21 in order to be controlled by the control source 21 to drive the fluid inside the channel where the pump 17 is arranged thereon to move.

In the first embodiment of the present invention, when the control source 21 controls the four-way electronic valve 11 to switch to the first channel state, the front end inlet 111 is, too, not fluidly connected to the rear end inlet 117. When it is switched to the second channel state, the front end inlet 111 is still not fluidly connected to the rear end inlet 117.

The above provides a detailed description on the structure of the first embodiment of the present invention. The following further describes the operational state of the first embodiment of the present invention.

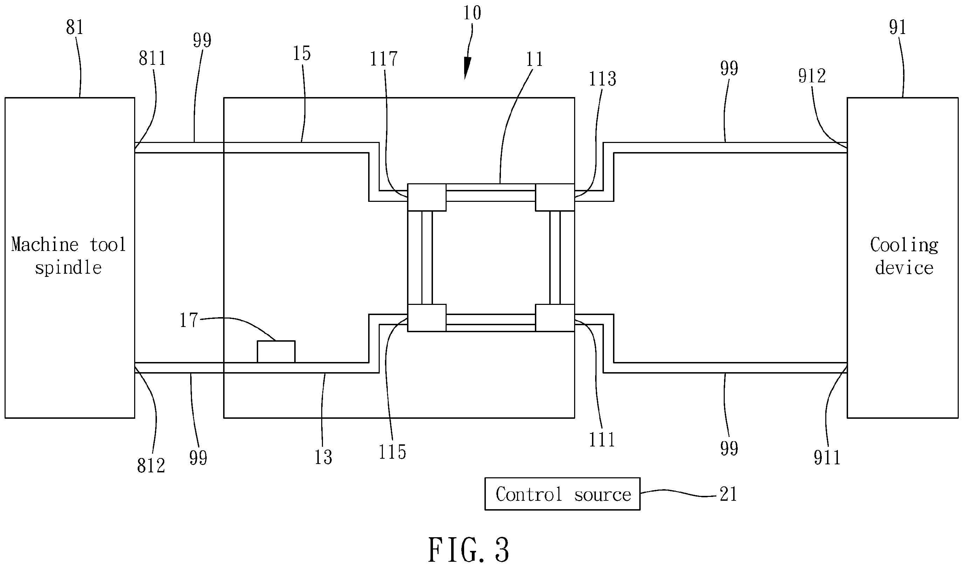

As shown in FIG. 3, prior to the use of the present invention, the present invention is installed on pipelines connected to a machine tool spindle 81 and a cooling device 91. For a known machine tool equipped with a cooling device 91, a delivery pipe and a return flow pipe are often used as the delivery and return paths of a circulating channel for a cooling fluid (referred to as the "fluid") between the machine tool spindle 81 and the cooling device 91. In addition, the cooling device 91 is equipped with a built-in water storage tank, cooling compressor and a driving motor (not shown in the drawings) for driving the fluid; therefore, originally, such device is able to operate independently to perform cooling. During the installation of the present invention, the delivery pipe and the return flow pipe can be cut open, and the present invention can then be connected at the pipe openings that are cut open on these two pipes, or new pipes can be used to directly replace the old or existing pipes being cut open. In this embodiment of the present invention, the method of installation with new pipes is used as an example for the illustration. After the installation, the outflow opening 911 of the cooling device 91 can use a pipe 99 for connecting to the front end inlet 111, and the outflow channel 13 can use a pipe 99 for connecting to an inflow opening 812 of the machine tool spindle 81. Furthermore, the outflow opening 811 of the machine tool spindle 81 also uses a pipe 99 for connecting to the return fluid incoming channel 15, and the front end outlet 113 uses a pipe 99 for connecting to a return flow opening 912 of the cooling device 91. Moreover, all of the aforementioned pipes 99, return flow incoming channel 15, outflow channel 13 and the four-way electronic valve 11 are filled with the fluid.

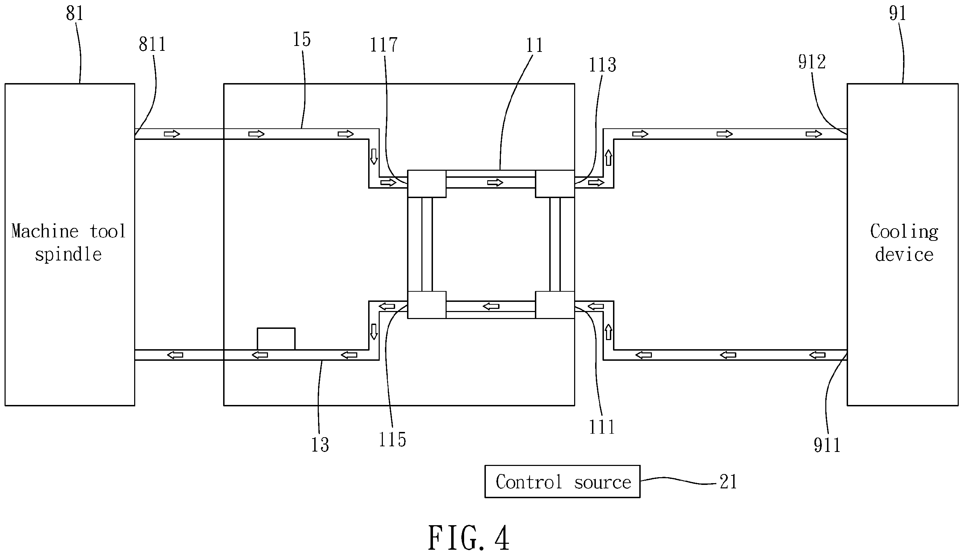

As shown in FIG. 4, during the actual operation, considering the example of a cooling operation, the user can command the control source 21 to perform the cooling action, and at this time, the control source 21 controls the four-way electronic valve 11 to switch to the first channel state. Accordingly, the fluid flowing out from the outflow opening 911 of the cooling device 91 is able to enter the front end inlet 111, following which it then flows out from the rear end outlet 115 to enter the outflow channel 13, and further entering into the machine tool spindle 81 at the end, thereby achieving the cooling effect. After the fluid absorbs heat inside the machine tool spindle 81, it flows out from the outflow opening 811 of the machine tool spindle 81 and enters the return flow incoming channel 15 to further enter the rear end inlet 117, following which, it then flows out from the front end outlet 113 to return back to the cooling device 91 via the return flow opening 912. Accordingly, it can be understood that during the cooling process, the present invention simply allows the fluid provided by the original cooling device 91 to pass through in order to form a cooling circulating path identical to the known cooling device 91 in order to perform cooling on the machine tool spindle 81.

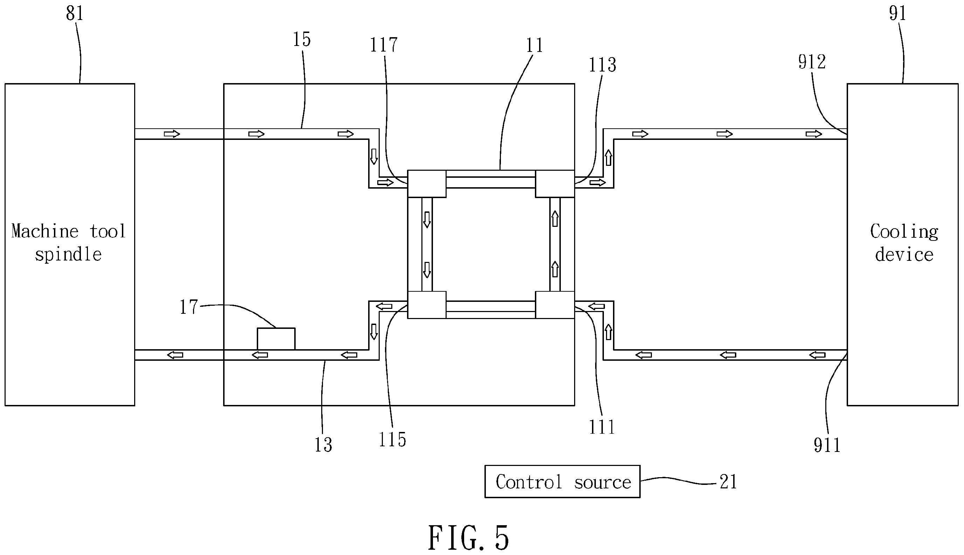

As shown in FIG. 5, to perform the temperature increase or heating operation, the user can command the control source 21 to perform the action of temperature increase. At this time, the control source 21 controls the four-way electronic valve 11 to switch to the second channel state, such that the fluid flowing out from the outflow opening 911 of the cooling device 91 is able to enter the front end inlet 111 and to further flow out from the front end outlet 113, followed by returning back to the cooling device 91 via the return flow opening 912; in other words, the fluid flowing out from the cooling device 91 does not flow to the machine tool spindle 81. In addition, the control source 21 also controls the pump 17 to operate in order to drive the fluid inside the outflow channel 13 to flow into the machine tool spindle 81, and the fluid flowing out from the machine tool spindle 81 then enters into the return fluid incoming channel 15. Finally, the fluid further enters into the rear end inlet 117 of the four-way electronic valve 11, followed by flowing out from the rear end outlet 115 to enter the outflow channel 13. In other words, the fluid absorbing the heat generated during the operation of the machine tool spindle 81 does not return back to the cooling device 91 but circulates among the outflow channel 13, the machine tool spindle 81, the return fluid 15 and the four-way electronic valve 11. Accordingly, the heat generated during the operation of the machine tool spindle 81 is used to perform the action of temperature increase or heating.

In view of the above, it can be understood that the first embodiment of the present invention is able to utilize the heat generated by a spindle of a machine tool originally equipped with a cooling device 91 to achieve the temperature increase or heating function while retaining its original temperature decrease or cooling function. Accordingly, the present invention provides an auxiliary apparatus capable of achieving temperature rise and fall effect. During the cooling process, the cooling fluid provided by the cooling device 91 flowing therethrough is used to perform cooling on the machine tool spindle 81 directly. For the heating process, flow channel is switched to allow the cooling fluid of the cooling device 91 to be stopped from flowing toward the machine tool spindle 81 by creating an independent circulating channel for the fluid flowing out from the machine tool spindle 81 in addition to that the heat generated during the operation of the machine tool spindle 81 is utilized to perform heating of the fluid inside such independent circulating channel, thereby achieving the temperature rise effect.

It shall be understood that the present invention adopts the technique of using a four-way electronic valve 11 to achieve the flow channel switch. In comparison to the technique of using a plurality of one-way electronic valves, the overall size of the present invention is much smaller; therefore, the present invention has the merits of relatively smaller overall size. In addition, during the cooling or heating process, since both the fluid of a lower temperature and the fluid of a higher temperature flow through the four-way electronic valve 11, there might be some concern on the temperature of the fluid inside the four-way electronic valve 11 being cancelled out due to heat exchange therebetween. Nonetheless, as the flow path inside the four-way electronic valve 11 is extremely short, if heat exchange effect actually occurs inside such valve, its impact on the temperature of the fluid is extremely minor; in other words, the change of the temperature of the fluid flowing through the four-way electronic valve 11 is small or negligible. As a result, in general, the overall configuration and design of the present invention is able to operate normally.

Furthermore, for a conventional machine tool, the components on the machine tool that often require cooling refer to a plurality of devices of the machine tool spindle 81, motor and hollow screw shaft etc. Accordingly, for the auxiliary apparatus 10 of the present invention, the target for the temperature adjustment effect is not limited to a machine tool spindle 81, and it can also be a motor or a hollow screw shaft to achieve the temperature adjustment effect. The connection method of the auxiliary apparatus 10 of the present invention to a motor or a hollow screw shaft is also identical to the connection method adopted between the machine tool spindle 81 and the auxiliary apparatus 10 of the present invention; consequently, details thereof are omitted hereafter.

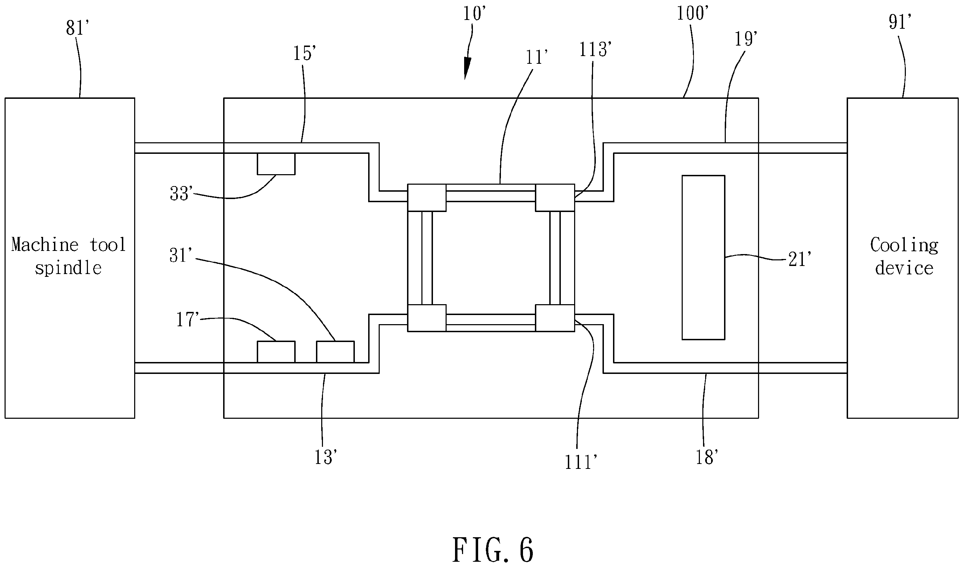

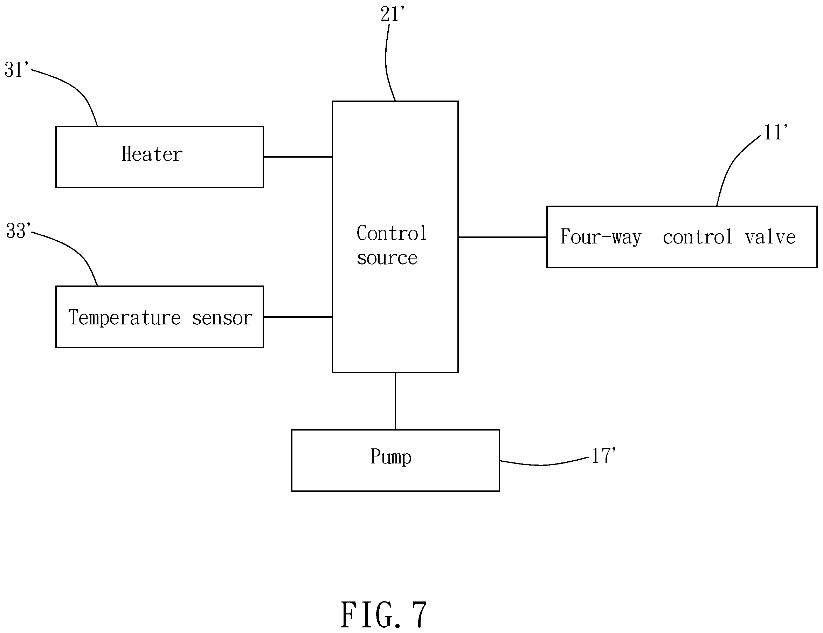

Please refer to FIG. 6 to FIG. 7. According to a second embodiment of the present invention, an auxiliary apparatus 10' using a four-way electronic valve to achieve temperature rise and fall effect on a component of a machine tool is provided, and it is generally the same as the first embodiment, and the difference mainly relies in:

In the second embodiment of the present invention, it further comprises a heater 31' and a temperature sensor 33'. The heater 31' is arranged on at least one of the two of the outflow channel 13' and the return fluid incoming channel 15'. In other words, it can be arranged on the outflow channel 13', or it can be arranged on the return fluid incoming channel 15', or it can be arranged on both of the two channels. In the second embodiment of the present invention, the arrangement on the outflow channel 13' is used as an example for illustration. The heater 31' is electrically connected to the control source 21' in order achieve the heating effect via the control of the control source 21'. The temperature sensor 33' is arranged on the return fluid incoming channel 15' and is electrically connected to the control source 21'.

The control source 21' refers to a microcomputer in the second embodiment of the present invention rather than an external control source 21'. During the arrangement, it can be arranged inside a housing 100', and the internal of the housing 100' can be installed with the four-way electronic valve 11', the outflow channel 13', the return fluid incoming channel 15' and the pump 17'.

In the second embodiment of the present invention, it further includes an inflow channel 18' and a return fluid outflow channel 19'. One end of the inflow channel 18' is connected to the front end inlet 111', and another end thereof is connected to the cooling device 91', in order to allow the fluid to further enter into the front end inlet 111' from the cooling device 91'. One end of the return fluid outflow channel 19' is connected to the front end outlet 113', and another end thereof is connected to the cooling device 91', in order to allow the fluid to flow out to the cooling device 91'.

During the use of the second embodiment of the present invention, to perform the heating operation, the control source 21' can be used to control the heater 31' to perform additional heating on the fluid such that the fluid circulating among the outflow channel 13', the machine tool spindle 81', the return fluid incoming channel 15' and the four-way electronic valve 11' can be heated at faster speed, thereby achieving the effect of fast heating with temperature rise. In addition, the temperature sensor 33' is able to detect the temperature of the fluid flowing out of the machine tool spindle 81'. The control source 21' can use the detection result of the temperature sensor 33' to determine the temperature of the fluid inside the machine tool spindle 81'. Accordingly, it is able to determine whether a heating operation or a cooling operation is required to be performed based on a predetermined determination logic. Since such determination logic is not the key technical feature to the present invention, details thereof are omitted hereafter.

The rest of the structure of the second embodiment of the present invention and its technical effects achieved are identical to the ones of the first embodiment of the present invention, and details thereof are omitted hereafter.

## Claims

1. An auxiliary apparatus (10)(10') using a four-way electronic valve (11)(11') to achieve temperature rise and fall effect on a component of a machine tool (81)(81'), adapted to be connected to pipelines (99) connected to a component of a machine tool (81)(81') and to a cooling device (91)(91'), the auxiliary apparatus (10)(10') being **characterised in that** it further comprises:
a four-way electronic valve (11)(11') having a front end inlet (111)(111'), a front end outlet (113)(113'), a rear end outlet (115) and a rear end inlet (117); the four-way electronic valve (11)(11') electrically connected to a control source (21)(21') and controlled by the control source (21)(21') to switch between two channel states; under a first channel state, the front end inlet (111)(111') being fluidly connected to the rear end outlet (115) but not fluidly connected to the front end outlet (113)(113'), and the rear end inlet (117) being fluidly connected to the front end outlet (113)(113') but not fluidly connected to the rear end outlet (115); under a second channel state, the front end inlet (111)(111') being fluidly connected to the front end outlet (113)(113') but not fluidly connected to the rear end outlet (115), and the rear end inlet (117) being fluidly connected to the rear end outlet (115) but not fluidly connected to the front end outlet (113)(113'); the front end inlet (111)(111') configured to allow a fluid of the cooling device (91)(91') to enter therein, and the front end outlet (113)(113') configured to allow the fluid to flow out to the cooling device (91)(91');
an outflow channel (13)(13') having one end connected to the rear end outlet (115) and another end configured to allow the fluid to flow out to the component of a machine tool (81)(81');
a return fluid incoming channel (15)(15') having one end connected to the rear end inlet (117) and another end configured to allow the fluid returning from the component of a machine tool (81)(81') to enter therein; and
a pump (17)(17') arranged on any one of the two of the outflow channel (13)(13') and the return fluid incoming channel (15)(15'), and electrically connected to the control source (21)(21') in order to be controlled by the control source (21)(21') to drive the fluid inside the channel where the pump (17)(17') is arranged thereon to move.

2. The auxiliary apparatus (10') using a four-way electronic valve (11') to achieve temperature rise and fall effect on a component of a machine tool (81') according to claim 1, further comprising an inflow channel (18') and a return fluid outflow channel (19'); one end of the inflow channel (18') connected to the front end inlet (111'); one end of the return fluid outflow channel (19') connected to the front end outlet (113').

3. The auxiliary apparatus (10') using a four-way electronic valve (11') to achieve temperature rise and fall effect on a component of a machine tool (81') according to claim 1, further comprising a heater (31') and a temperature sensor (33'); the heater (31') arranged on at least one of the two of the outflow channel (13') and the return fluid incoming channel (15'), and electrically connected to the control source (21') in order to be controlled by the control source (21') to provide a heating effect; the temperature sensor (33') arranged on the return fluid incoming channel (15') and electrically connected to the control source (21').

4. The auxiliary apparatus (10') using a four-way electronic valve (11') to achieve temperature rise and fall effect on a component of a machine tool (81') according to claim 1, wherein the control source (21') is a microcomputer.

5. The auxiliary apparatus (10) using a four-way electronic valve (11) to achieve temperature rise and fall effect on a component of a machine tool (81) according to claim 1, wherein the control source (21) is an external control box.

## Patentansprüche

1. Hilfsvorrichtung (10)(10'), welche ein elektronisches Vier-Wege-Ventil (11)(11') verwendet, um einen Temperaturanstiegs- und -abnahmeeffekt an einem Bauteil einer Werkzeugmaschine (81)(81') zu erzielen, und welche angepasst ist, mit Rohrleitungen (99) verbunden zu werden, die mit einem Bauteil einer Werkzeugmaschine (81)(81') und mit einer Kühlvorrichtung (91)(91') verbunden sind, worin die Hilfsvorrichtung (10)(10') **dadurch gekennzeichnet ist, dass** sie ferner umfasst:
ein elektronisches Vier-Wege-Ventil (11)(11') mit einem Einlass (111)(111') am vorderen Ende, einem Auslass (113)(113') am vorderen Ende, einem Auslass (115) am hinteren Ende und einem Einlass (117) am hinteren Ende; worin das elektronische Vier-Wege-Ventil (11)(11') elektrisch mit einer Steuerquelle (21)(21') verbunden ist und von der Steuerquelle (21)(21') gesteuert wird, zwischen zwei Kanalzuständen zu wechseln; worin in einem ersten Kanalzustand der Einlass (111)(111') am vorderen Ende mit dem Auslass (115) am hinteren Ende, aber nicht mit dem Auslass (113)(113') am vorderen Ende strömungsmäßig verbunden ist, und der Einlass (117) am hinteren Ende mit dem Auslass (113)(113') am vorderen Ende, aber nicht mit dem Auslass (115) am hinteren Ende strömungsmäßig verbunden ist; worin in einem zweiten Kanalzustand der Einlass (111)(111') am vorderen Ende strömungstechnisch mit dem Auslass (113)(113') am vorderen Ende verbunden ist, jedoch nicht mit dem Auslass (115) am hinteren Ende strömungstechnisch verbunden ist, und der Einlass (117) am hinteren Ende mit dem Auslass (115) am hinteren Ende strömungstechnisch verbunden ist, jedoch nicht mit dem Auslass (113)(113') am vorderen Ende strömungstechnisch verbunden ist; worin der Einlass (111)(111') am vorderen Ende derart ausgestaltet ist, dass ein Fluid der Kühlvorrichtung (91)(91') darin eintreten kann, und der Auslass (113)(113') am vorderen Ende derart ausgestaltet ist, dass das Fluid zu der Kühlvorrichtung (91)(91') ausfließen kann;
einen Abflusskanal (13) (13'), dessen eines Ende mit dem Auslass am hinteren Ende (115) verbunden ist und dessen anderes Ende derart ausgestaltet ist, dass das Fluid zu der Komponente einer Werkzeugmaschine (81) (81') abfließen kann;
einen Rücklauffluid-Eingangskanal (15)(15'), dessen eines Ende mit dem Einlass (117) des hinteren Endes verbunden ist und dessen anderes Ende derart ausgestaltet ist, dass das von der Komponente einer Werkzeugmaschine (81)(81') zurücklaufende Fluid darin eintreten kann; und
eine Pumpe (17) (17'), die an einem von dem Abflusskanal (13) (13') und dem Rücklauffluid-Eingangskanal (15) (15') angeordnet und elektrisch mit der Steuerquelle (21) (21') verbunden ist, um von der Steuerquelle (21) (21') gesteuert zu werden, das Fluid innerhalb des Kanals, an dem die Pumpe (17) (17') angeordnet ist, in Bewegung zu setzen.

2. Hilfsvorrichtung (10'), welche ein elektronisches Vier-Wege-Ventil (11') verwendet, um einen Temperaturanstiegs- und -abnahmeeffekt an einer Komponente einer Werkzeugmaschine (81') zu erzielen, nach Anspruch 1, die ferner einen Zuflusskanal (18') und einen Rücklauffluid-Auslasskanal (19') umfasst, worin ein Ende des Zuflusskanals (18') mit dem Einlass (111') des vorderen Endes verbunden ist und ein Ende des Rücklauffluid-Auslasskanals (19') mit dem Auslass (113') des vorderen Endes verbunden ist.

3. Hilfsvorrichtung (10'), welche ein elektronisches Vier-Wege-Ventil (11') verwendet, um einen Temperaturanstiegs- und -abnahmeeffekt an einer Komponente einer Werkzeugmaschine (81') zu erzielen, nach Anspruch 1, die ferner eine Heizung (31') und einen Temperatursensor (33') umfasst; worin die Heizung (31') an mindestens einem von dem Ausflusskanal (13') und dem Rücklauffluid-Eingangskanal (15') angeordnet und mit der Steuerquelle (21') elektrisch verbunden ist, um von der Steuerquelle (21') gesteuert zu werden, einen Heizeffekt bereitzustellen; worin der Temperatursensor (33') an dem Rücklauffluid-Eingangskanal (15') angeordnet und mit der Steuerquelle (21') elektrisch verbunden ist.

4. Hilfsvorrichtung (10'), welche ein elektronisches Vier-Wege-Ventil (11') verwendet, um einen Temperaturanstiegs- und -abnahmeeffekt an einer Komponente einer Werkzeugmaschine (81') zu erzielen, nach Anspruch 1, worin die Steuerquelle (21') ein Mikrocomputer ist.

5. Hilfsvorrichtung (10'), welche ein elektronisches Vier-Wege-Ventil (11') verwendet, um einen Temperaturanstiegs- und -abnahmeeffekt an einer Komponente einer Werkzeugmaschine (81') zu erzielen, nach Anspruch 1 worin die Steuerquelle (21) ein externer Steuerkasten ist.

## Revendications

1. Appareil auxiliaire (10)(10') utilisant une vanne électronique à quatre voies (11)(11') pour obtenir un effet d'augmentation et de diminution de la température sur un composant d'une machine-outil (81)(81'), adapté pour être connecté à des canalisations (99) connectées à un composant d'une machine-outil (81)(81') et à un dispositif de refroidissement (91)(91'), l'appareil auxiliaire (10)(10') étant **caractérisé en ce qu'**il comprend en outre:
une vanne électronique à quatre voies (11)(11') ayant une entrée d'extrémité avant (111)(111'), une sortie d'extrémité avant (113)(113'), une sortie d'extrémité arrière (115) et une entrée d'extrémité arrière (117); la vanne électronique à quatre voies (11)(11') connectée électriquement à une source de commande (21)(21') et commandée par la source de commande (21)(21') pour commuter entre deux états de canal; dans un premier état de canal, l'entrée d'extrémité avant (111)(111') étant reliée de manière fluide à la sortie d'extrémité arrière (115) mais non reliée de manière fluide à la sortie d'extrémité avant (113)(113'), et l'entrée d'extrémité arrière (117) étant reliée de manière fluide à la sortie d'extrémité avant (113)(113') mais non reliée de manière fluide à la sortie d'extrémité arrière (115); dans un deuxième état de canal, l'entrée d'extrémité avant (111)(111') étant reliée de manière fluide à la sortie d'extrémité avant (113)(113') mais non reliée de manière fluide à la sortie d'extrémité arrière (115), et l'entrée d'extrémité arrière (117) étant reliée de manière fluide à la sortie d'extrémité arrière (115) mais non reliée de manière fluide à la sortie d'extrémité avant (113)(113'); l'entrée d'extrémité avant (111)(111') configurée pour permettre à un fluide du dispositif de refroidissement (91)(91') d'y entrer, et la sortie d'extrémité avant (113)(113') configurée pour permettre au fluide de s'écouler vers le dispositif de refroidissement (91)(91');
un canal de sortie (13)(13') ayant une extrémité connectée à la sortie d'extrémité arrière (115) et une autre extrémité configurée pour permettre au fluide de s'écouler vers le composant d'une machine-outil (81)(81');
un canal d'entrée de fluide de retour (15)(15') ayant une extrémité connectée à l'entrée d'extrémité arrière (117) et une autre extrémité configurée pour permettre au fluide revenant du composant d'une machine-outil (81)(81') d'y entrer; et
une pompe (17)(17') disposée sur l'un quelconque des deux parmi le canal de sortie (13)(13') et le canal d'entrée de fluide de retour (15)(15'), et connectée électriquement à la source de commande (21)(21') afin d'être commandée par la source de commande (21)(21') pour entraîner le fluide à l'intérieur du canal où la pompe (17)(17') est disposée dessus pour se déplacer.

2. Appareil auxiliaire (10') utilisant une vanne électronique à quatre voies (11') pour obtenir un effet d'augmentation et de diminution de température sur un composant d'une machine-outil (81') selon la revendication 1, comprenant en outre un canal d'entrée (18') et un canal de sortie de fluide de retour (19'); une extrémité du canal d'entrée (18') connectée à l'entrée d'extrémité avant (111'); une extrémité du canal de sortie de fluide de retour (19') connectée à la sortie d'extrémité avant (113').

3. Appareil auxiliaire (10') utilisant une vanne électronique à quatre voies (11') pour obtenir un effet d'augmentation et de diminution de température sur un composant d'une machine-outil (81') selon la revendication 1, comprenant en outre un dispositif de chauffage (31') et un capteur de température (33'); le dispositif de chauffage (31') disposé sur au moins l'un des deux parmi le canal de sortie (13') et le canal d'entrée de fluide de retour (15'), et connecté électriquement à la source de commande (21') afin d'être commandé par la source de commande (21') pour fournir un effet de chauffage; le capteur de température (33') disposé sur le canal d'entrée de fluide de retour (15') et connecté électriquement à la source de commande (21').

4. Appareil auxiliaire (10') utilisant une vanne électronique à quatre voies (11') pour obtenir un effet d'augmentation et de diminution de température sur un composant d'une machine-outil (81') selon la revendication 1, dans lequel la source de commande (21') est un micro-ordinateur.

5. Appareil auxiliaire (10') utilisant une vanne électronique à quatre voies (11') pour obtenir un effet d'augmentation et de diminution de température sur un composant d'une machine-outil (81') selon la revendication 1, dans lequel la source de commande (21) est un boîtier de commande externe.
